# EUROPEAN PATENT SPECIFICATION

(11) **EP 2 955 071 B1**
(45) Date of publication and mention of the grant of the patent: **08.11.2017**
(21) Application number: 13874505.4
(22) Date of filing: 07.02.2013
(51) Int. Cl.: B29C 73/16, B60S 5/04

(54) **AIR COMPRESSOR APPARATUS FOR AIR INFLATION AND RUBBER FILLING**
LUFTKOMPRESSORVORRICHTUNG FÜR LUFTINFLATION UND GUMMIFÜLLUNG
COMPRESSEUR POUR LE GONFLAGE À L'AIR ET LA RECONSTITUTION DU CAOUTCHOUC

(43) Date of publication of application: 16.12.2015
(73) Proprietor: Chou, Wen-san, Tainan City 745 (TW)
(72) Inventor: Chou, Wen-san, Tainan City 745 (TW)
(74) Representative: Lang, Christian
(86) International application number: PCT/CN2013/071537
(87) International publication number: WO 2014/121500

(56) References cited:
- CN-A- 101 408 155
- CN-A- 101 890 940
- CN-U- 87 205 222
- CN-U- 201 784 594
- DE-C- 956 382
- DE-U1-202007 016 242
- US-A- 5 983 920
- US-A- 5 983 920
- US-A1- 2010 108 185

## Description

### BACKGROUND OF THE INVENTION

### 1. Field of the Invention

The present invention provides an air compressor having inflating and aerosol spraying functions for tires, particularly for one has an innovative actuator with an eccentric cam so that the present invention can not only perform singly inflating function for the flat tire but also perform fixing function for the rupture tire.

### 2. Description of the Prior Art

The essential structure of a conventional tire fixing aerosol comprises a cover, a canister and an inner dip tube, wherein the canister is filled with chemical sol therein for urgently fixing a ruptured tire temporarily; the cover usually includes two manifolds such that one manifold is used to connect with a compressed air output from an air compressor while the other manifold is used to connect with a chemical sol muzzle from the canister; and the inner dip tube, which is linked to the cover, is disposed inside of the canister when the cover is engaged with the cover. Currently, most conventional apparatus used in urgently fixing a ruptured tire temporarily is equipped by a separated tire fixing aerosol with two manifolds together with a case containing an air compressor therein, which is to supply compressed air to the tire fixing aerosol. In practical operation of fixing a ruptured tire, a user can connect the first manifold of the tire fixing aerosol to a compressed air output from the case while connect the other second manifold of the tire fixing aerosol to the nozzle of the ruptured tire. Then, the user starts the air compressor to initiate the propellant of the chemical sol forced out of the canister into the ruptured tire for accomplishing the tire sealing and fixing temporarily. However, the conventional design of tire fixing aerosol with case, which is limited in used for fixing a ruptured tire, can not be alternatively used in inflating a flat tire independently. Having realized and addressed forgoing drawbacks of the conventional tire fixing aerosol, the inventor of the present invention contrives an innovative actuator with an eccentric cam able to switch between two manifolds of tire fixing aerosol so as to independently perform inflating function for flat tire and aerosol spraying function for ruptured tire respectively.

DE 20 2007 016 242 U1 discloses an air compressor according to the preamble of claim 1.

### SUMMARY OF THE INVENTION

The primary object of the present invention is to provide an air compressor having inflating and aerosol spraying functions for tires, which comprises a case containing an air compressor and a tire fixing aerosol containing chemical sol therein with an actuator, which enables the present invention to shift the operation of the air compressor and tire fixing aerosol between the singly inflating and fixing functions for tire with easy manipulation. In order to achieve above object, the present invention offer a solution as below. An air compressor having inflating and aerosol spraying functions for tires comprises a case containing an air compressor and a tire fixing aerosol containing chemical sol therein with an actuator, wherein said air compressor serves to supply compressed air; said tire fixing aerosol includes a first manifold and a second manifold, wherein the first manifold serves to receive the compressed air from the air compressor while the second manifold serves to supply the chemical sol from the tire fixing aerosol. The tire fixing aerosol basically comprises a canister, a cover, an actuator and a dip tube with deformed upper tubular section, wherein the canister, which is a hollow container, includes a neck opening, a canister arcuate bottom and a holding chamber for containing chemical sol therein. The cover, which is engaged with the canister 2 by means of thread-screwing way, further includes an upper annular gap, a lower annular gap, a plurality of equal-spaced vertical through trough formed on the surrounding wall of the downwards round cylinder, and a bottom flange formed at the bottom of the downwards round cylinder to create a round hole communicable with an internal circulating chamber of the downwards round cylinder. The cover further includes an aperture on the top end thereof with a pair of opposed through slots and a pair of opposed axle holes, wherein each through slot is formed with top opening and bottom closed manner, and the pair axle holes are located between the pair through slots. The upwards round cylinder includes a first manifold and a second manifold to communicate with the internal circulating chamber. The cover further includes a spring, which is inserted form the aperture of the upwards round cylinder and positioned on the bottom flange in the internal circulating chamber of the downwards round cylinder. The dip tube of suitable length includes a tubular inner-space, a swollen top collar section with a top closed end, a sealing O-ring disposed on the top collar section, and a tube lower section. The dip tube further includes a middle notched upper flange with a sealing O-ring wrapping on the middle notch thereof, a middle notched lower flange with a sealing O-ring wrapping on the middle notch thereof and a first annular neck groove with a tube through hole disposed between the middle notched upper flange and middle notched lower flange such that the tube through hole run through the dip tube at the first annular neck groove in communicable manner. The dip tube further includes a second annular neck groove formed between the middle notched upper flange and middle notched lower flange. The actuator is engaged with a pair axle holes to allow the actuator pivot around so that the displacement of the dip tube can be changeable. The actuator includes an eccentric cam with a pair of camshafts on both sides thereof, and a lever ring on the other end of the actuator, wherein the pair camshafts are engaged with the pair axle holes to allow the actuator pivot around, and the camshaft serves as a pivotal center of the lever ring while the eccentric cam may be located on the aperture of the upwards round cylinder to contact against the top closed end of the dip tube. The pair through slot of the upwards round cylinder allows a user to handle the actuator in semicircular swing for changing operation mode. The case further comprises a first compartment, a second compartment and a third compartment, wherein the first compartment includes a plurality of septa such that the air compressor and manometer can be respectively partitioned by each septum. One end of a first transmitting hose is connected to the discharging manifold of the air compressor while the other end thereof is connected to the first manifold of the tire fixing aerosol; One end of an exposed second transmitting hose is connected to the second manifold of the tire fixing aerosol while the other end thereof is connected to the nozzle of the rupture tire; One end of a third transmitting hose is connected to the discharging manifold of the air compressor while the other end thereof is connected to the manometer.

With foregoing structure, the present invention can not only perform singly inflating function for the flat tire but also perform fixing function for the rupture tire. Regarding the specific structure and the practical functions, detailed description is manifested in the following preferred exemplary embodiments in association with suitably accompanying drawings.

### BRIEF DESCRIPTION OF THE DRAWINGS

FIG. 1 is a perspective schematic view showing an air compressor together with a tire fixing aerosol having inflating and aerosol spraying functions for tires of the present invention.
FIG. 2 is an exploded schematic view showing an air compressor together with a tire fixing aerosol having inflating and aerosol spraying functions for tires of the present invention.
FIG. 3 is a cross-sectional schematic view showing a tire fixing aerosol used in the present invention.
FIG. 4 is a top planar schematic view sectioned from line A-A direction in previous FIG. 3 for a tire fixing aerosol of the present invention.
FIG. 5 is an operational cross-sectional schematic view showing for an air compressor singly doing inflating function for a tire of the present invention.
FIG. 6 is an operational cross-sectional schematic view showing for an air compressor singly doing aerosol spraying function for a tire of the present invention.

### DESCRIPTION OF THE PREFERRED EMBODIMENTS

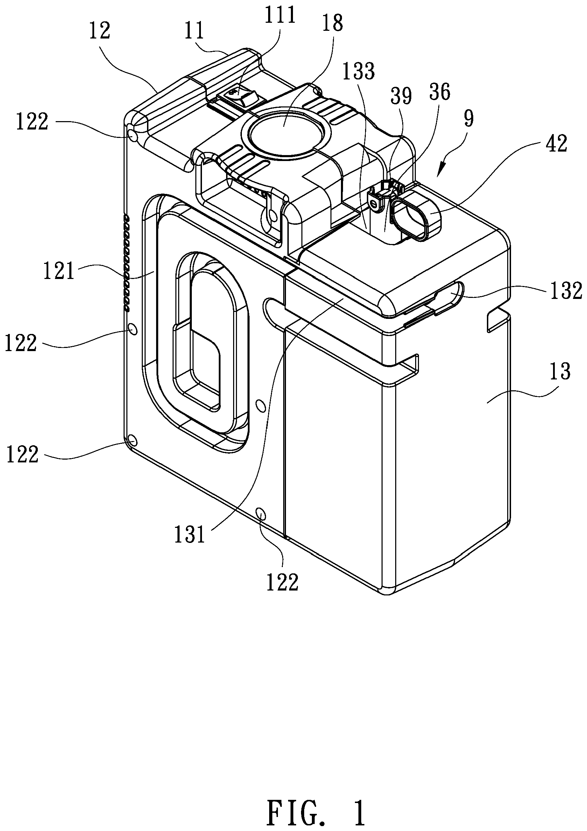

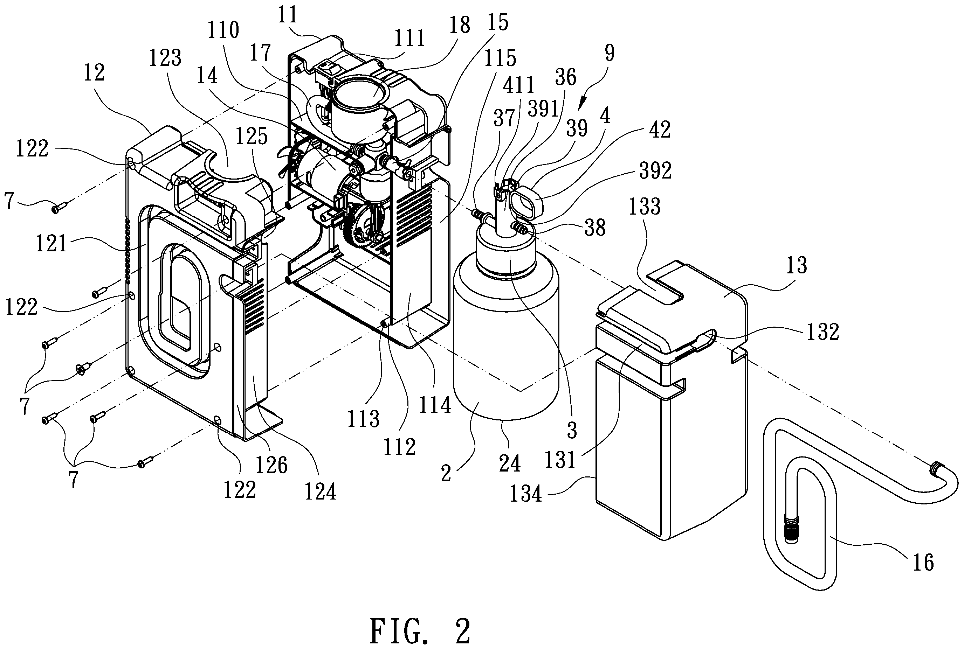

In order to further disclose the technological means of the present invention, some preferred exemplary embodiments are detailed described as following in association with accompanying drawings. Please refer to FIGS. 1 and 2, which show an air compressor together with a tire fixing aerosol having inflating and aerosol spraying functions for tires of the present invention. The air compressor and tire fixing aerosol here, which are denoted with referential numerals as air compressor 14 and tire fixing aerosol 9, comprises a pressure gauge or manometer 18, a case in combination of first compartment 11, second compartment 12 and third compartment 13, as well as a concealed first transmitting hose 15, an exposed second transmitting hose 16 and a concealed third transmitting hose 17, wherein:
The first compartment 11 includes a plurality of septa 110, a switch 111 and a plurality of engagement shafts 112 with each engagement bore 113 therein such that the air compressor 14 and manometer 18 can be respectively partitioned by each septum 110; the switch 111 is disposed at the top surface of the first compartment 11 for serving to start and stop operation of the air compressor 14;
The second compartment 12, which is combined with the first compartment 11 by running a plurality of locking elements 7 through a plurality of through bores 122 thereon and corresponding engagement bores 113 in the engagement shafts 112 of the first compartment 11, includes a serpent-curled internal recess 121 in front panel ,a semicircular punched hole 123 for accommodating the manometer 18 in exposed manner, and a lateral panel 124 with a protrude panel 126 vertically extended from abutting edge to match with corresponding lateral panel 114 with a protrude panel 115 in the first compartment 11;
The third compartment 13 includes an encompassed space 130, an internal recess 131 with a punched hole 132, a cut-out 133 created on the top surface thereof, and a pair of latches 134 formed on both side walls for engagement with the protrude panels 115, 126 on the first compartment 11 and second compartment 12 respectively.

The tire fixing aerosol 9 is firmly disposed in the encompassed space 130 of the third compartment 13 in contact with the lateral panels 114, 124 on the first compartment 11 and second compartment 12 respectively without possibility of tilting or tumbling; One end of the first transmitting hose 15 is connected to the discharging manifold 141 of the air compressor 14 while the other end thereof is connected to the first manifold 37 of the tire fixing aerosol 9; One end of the second transmitting hose 16 is connected to the second manifold 38 of the tire fixing aerosol 9 while the other end thereof is connected to the nozzle of the rupture tire (not shown in figures); One end of the third transmitting hose 17 is connected to the discharging manifold 142 of the air compressor 14 while the other end thereof is connected to the manometer 18; When the switch 111 is toggled in on status, the compressed air is pumped into the rupture tire orderly via first transmitting hose 15, inside of the tire fixing aerosol 9 and second transmitting hose 16 for injecting chemical sol 23 into the rupture tire to perform fixing and inflating functions.

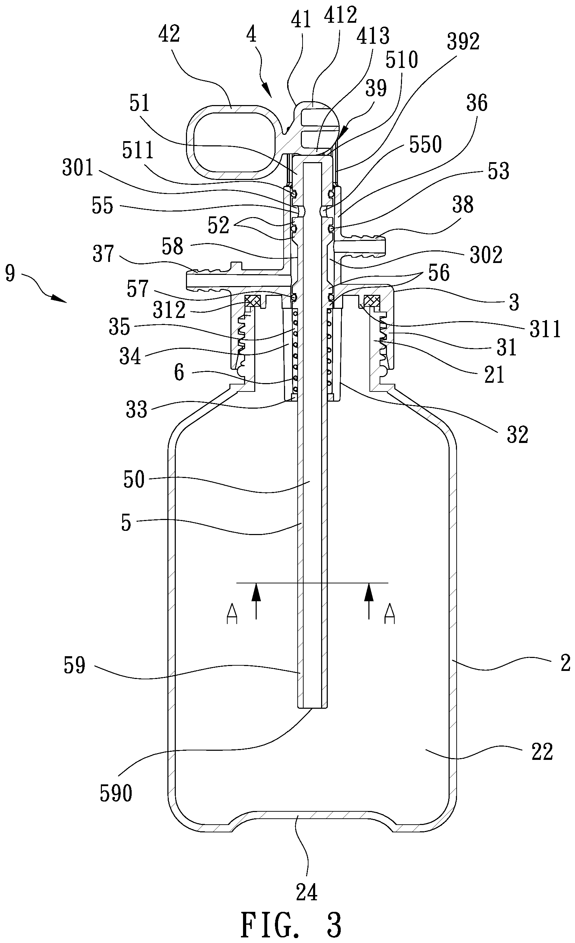

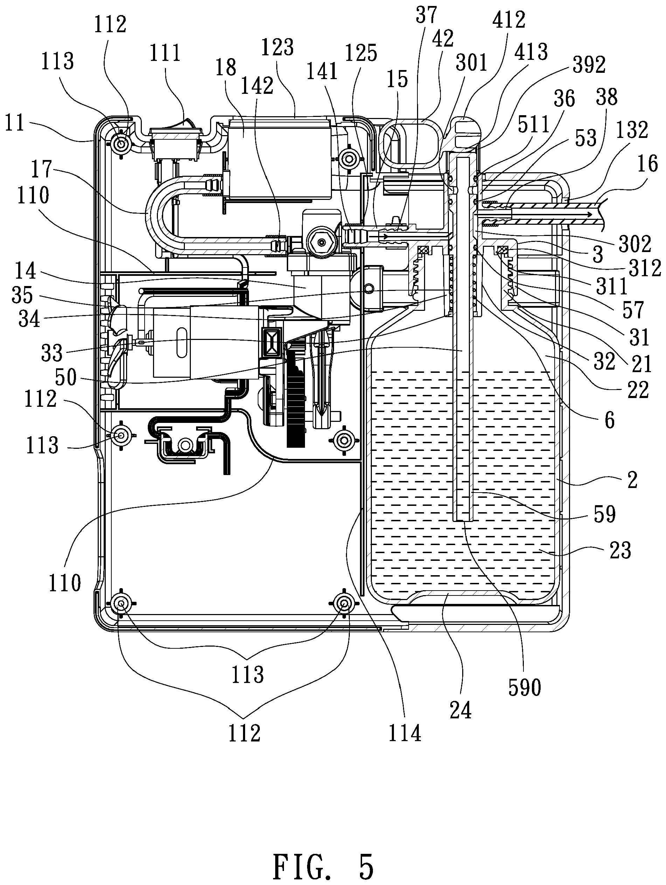

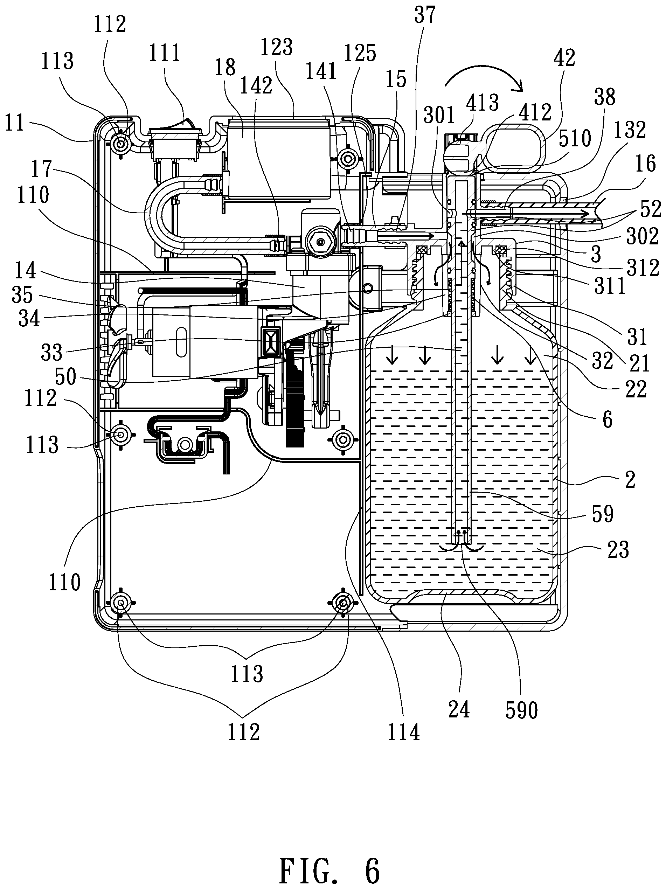

Please refer to FIGS. 3 through 6. The tire fixing aerosol 9 basically comprises a canister 2, a cover 3, an actuator 4 and a dip tube 5 with deformed upper tubular section, wherein the canister 2, which is a hollow container, includes a neck opening 21, a canister arcuate bottom 24 and a holding chamber 22 for containing chemical sol 23 therein (as shown in FIGS. 5 and 6);

The cover 3 includes a locking collar 31 for being engaged with the neck opening 21 of the canister 2 by means of thread-screwing way, which can be done by any suitable fastening means including thread-screwing way or thermal fusing way though the thread-screwing way is shown here;

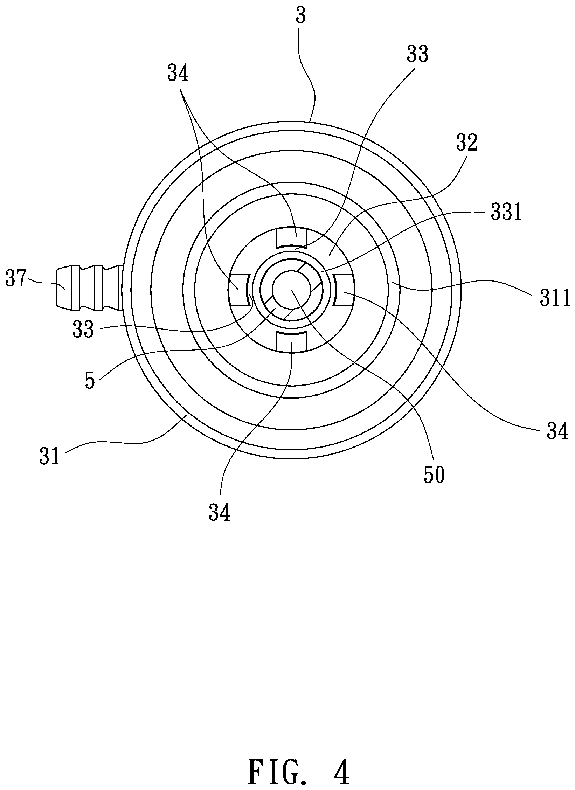

The cover 3 further includes an upper annular gap 301 and a lower annular gap 302, wherein on the bottom wall of the cover 3, an internal annular curb 311 is disposed between the peripheral of the downwards round cylinder 32 and the locking collar 31 of the cover 3 while an annular gasket or washer 312 is disposed between the internal annular curb 311 and the locking collar 31 so that the neck opening 21 thread-screwed by the cover 3 and canister 2 becomes more stable and hermetical. The cover 3 further includes a plurality of equal-spaced vertical through trough 34 formed on the surrounding wall of the downwards round cylinder 32, and a bottom flange 33 formed at the bottom of the downwards round cylinder 32 to create a round hole 331 communicable with an internal circulating chamber 35 of the downwards round cylinder 32 (as shown in FIG. 4). The cover 3 further includes an aperture 39 on the top end thereof with a pair of opposed through slots 392 and a pair of opposed axle holes 391, wherein each through slot 392 is formed with top opening and bottom closed manner, and the pair axle holes 391 are located between the pair through slots 392. The upwards round cylinder 36 includes a first manifold 37 and a second manifold 38 to communicate with the internal circulating chamber 35. The cover 3 further includes a spring 6, which is inserted form the aperture 39 of the upwards round cylinder 36 and positioned on the bottom flange 33 in the internal circulating chamber 35 of the downwards round cylinder 32.

The dip tube 5 of suitable length includes a tubular inner-space 50, a swollen top collar section 51 with a top closed end 510, a sealing O-ring 511 disposed on the top collar section 51, and a tube lower section 59. The dip tube 5 further includes a middle notched upper flange 52 with a sealing O-ring 53 wrapping on the middle notch thereof, a middle notched lower flange 56 with a sealing O-ring 57 wrapping on the middle notch thereof and a first annular neck groove 55 with a tube through hole 550 disposed between the middle notched upper flange 52 and middle notched lower flange 56 such that the tube through hole 550 run through the dip tube 5 at the first annular neck groove 55 in communicable manner. The dip tube 5 further includes a second annular neck groove 58 formed between the middle notched upper flange 52 and middle notched lower flange 56.

The tube lower section 59 of the dip tube 5 can be inserted through the aperture 39 of the upwards round cylinder 36 and run out from the round hole 331 of the bottom flange 33. In this manner, the middle notched lower flange 56 of the dip tube 5 just contact against top end of the spring 6 and located between the downwards round cylinder 32 and upwards round cylinder 36 in the cover 3. Moreover, a pair of movable upper annular gap 301 and lower annular gap 302 are created between the first annular neck groove 55 and second annular neck groove 58 as well as the downwards round cylinder 32 and upwards round cylinder 36 respectively.

The actuator 4 includes an eccentric cam 41 with a pair of camshafts 411 on both sides thereof, and a lever ring 42 on the other end of the actuator 4, wherein the pair camshafts 411 are engaged with the pair axle holes 391 to allow the actuator 4 pivot around, and the camshaft 411 serves as a pivotal center of the lever ring 42 while the eccentric cam 41 may be located on the aperture 39 of the upwards round cylinder 36 to contact against the top closed end 510 of the dip tube 5. The pair through slot 392 of the upwards round cylinder 36 allows a user to handle the actuator 4 in semicircular swing for changing operation mode.

After having assembled the canister 2 and cover 3, which is combination of the actuator 4, dip tube 5 and spring 6, the downwards round cylinder 32 of the cover 3, most portion of the dip tube 5 covering the middle notched lower flange 56 and tube lower section 59 are all contained in the holding chamber 22 of the canister 2 (as shown in FIG. 3).

Please refer to FIGS. 1 and 5. FIG 5 is an operational cross-sectional schematic view showing for an air compressor singly doing inflating function for a tire of the present invention having the air compressor 14, manometer 18 and tire fixing aerosol 9 contained in the case with combination of compartments 11, 12 and 13. The discharging manifold 142 of the air compressor 14 is connected to the manometer 18 via the third transmitting hose 17. One end of the discharging manifold 141 on the air compressor 14 is connected to the first transmitting hose 15 while the other end thereof is connected to the first manifold 37 of the tire fixing aerosol 9 in the third compartment 13 via the punched holes 125. The upwards round cylinder 36 of the tire fixing aerosol 9 can be latched with the cut-out 133 of the third compartment 13. The second manifold 38 of the tire fixing aerosol 9 is connected to the second transmitting hose 16, which can be folded and stored in the internal recess 121, 131 via running through the punched holes 132.

Please refer to FIGS. 5 and 6. FIG. 5 is an operational cross-sectional schematic view showing for an air compressor singly doing inflating function for a tire of the present invention while FIG. 6 is an operational cross-sectional schematic view showing for an air compressor singly doing aerosol spraying function for a tire of the present invention. The short radial or cam minor axis 413 of the eccentric cam 41 in the actuator 4 contacts against the top closed end 510 of the dip tube 5 (as shown in FIG. 3). In this manner, the spring 6 is in released manner, the compressed air not only reaches the upwards round cylinder 36 of the cover 3 orderly via the first transmitting hose 15 and first manifold 37, but also reaches the lower annular gap 302 in the second annular neck groove 58 of the dip tube 5 so that the first manifold 37 and second manifold 38 become communicable. Thereby, the compressed air out of the second manifold 38 can singly perform inflating function for the flat tire (as shown in FIG. 5).

For performing fixing and inflating operation for the rupture tire, the user can swing the lever ring 42 of the actuator 4 as indicated by the arrowhead in the FIG. 6 so that the long radial or cam major axis 412 instead of cam minor axis 413 of the eccentric cam 41 in the actuator 4 contacts against the top closed end 510 of the dip tube 5 (as shown in FIG. 6). In this manner, the dip tube 5 is pushed downwardly due to the spring 6 is in compressed manner so that the middle notched upper flange 52 of the dip tube 5 will blocks the communication between the first manifold 37 and second manifold 38. Therefore, the compressed air, which reaches the upwards round cylinder 36 of the cover 3 orderly via the first transmitting hose 15 and first manifold 37, can not come out of the second manifold 38. Instead, the compressed air flows into the holding chamber 22 of the canister 2 orderly via the lower annular gap 302 between the second annular neck groove 58 and upwards round cylinder 36, and the vertical through trough 34 of the downwards round cylinder 32. Thereby, the compressed air impels the chemical sol 23 in the canister 2 into the dip tube 5 via the lower tube opening 590 of the tube lower section 59 to rapidly float up so that the chemical sol 23 can be expelled out the second transmitting hose 16 for performing fixing function for the rupture tire orderly via the first annular neck groove 55, tube through hole 550, upper annular gap 301 and second manifold 38.

With foregoing technology disclosed in association with the FIGS. 5 and 6, the innovative actuator 4 together with the tire fixing aerosol 9 contained in the case, the present invention can not only perform singly inflating function for the flat tire but also perform fixing function for the rupture tire.

In conclusion the disclosure heretofore, the eccentric cam 41 in the actuator 4 enables the present invention to shift the operation of the air compressor 14 and tire fixing aerosol 9 between the singly inflating and fixing functions for tire with easy manipulation.

## Claims

1. An air compressor (14) having inflating and aerosol spraying functions for tires comprises a case containing an air compressor (14) and a tire fixing aerosol (9) containing chemical sol (23) therein with an actuator (4), **characterized in that** said air compressor (14) serves to supply compressed air; said tire fixing aerosol (9) includes an upwards round cylinder (36) with a first manifold (37) and a second manifold (38), wherein the first manifold (37) serves to receive the compressed air from the air compressor (14) while the second manifold (38) serves to supply the chemical sol (23) from the tire fixing aerosol (9); **characterized in that** said actuator (4), which serves to shift the operation of the air compressor (14) and tire fixing aerosol (9) between the singly inflating and fixing functions, includes an eccentric cam (41) and a lever ring (42), wherein the eccentric cam (41) is located on the upwards round cylinder (36) to allow a user to handle the actuator (4) in semicircular swing for changing operation mode.

2. The air compressor (14) is recited and claimed in claim 1, wherein said case further comprises a first compartment (11), a second compartment (12) and a third compartment (13), wherein said first compartment (11) includes a plurality of septa (110), a switch (111) and a plurality of engagement shafts (112) with each engagement bore (113) therein such that the air compressor (14) and manometer (18) are respectively partitioned by each septum (110); the switch (111) is disposed at the top surface of the first compartment (11) for serving to start and stop operation of the air compressor (14); said second compartment (12), which is combined with the first compartment (11) by running a plurality of locking elements 7 through a plurality of through bores (122) thereon and corresponding engagement bores (113) in the engagement shafts (112) of the first compartment (11), includes a serpent-curled internal recess (121) in front panel, a semicircular punched hole (123) for accommodating the manometer (18) in exposed manner, and a lateral panel (124) with a protrude panel (126) vertically extended from abutting edge to match with corresponding lateral panel (114) with a protrude panel (115) in the first compartment (11); and said third compartment (13) includes an encompassed space (130), an internal recess (131) with a punched hole (132), a cut-out (133) created on the top surface thereof, and a pair of latches (134) formed on both side walls for engagement with the protrude panels (115), (126) on the first compartment (11) and second compartment (12) respectively.

3. The air compressor (14) is recited and claimed in claim 2, wherein said tire fixing aerosol (9) is firmly disposed in the encompassed space (130) of the third compartment (13) in contact with lateral panels (114), (124) on the first compartment (11) and second compartment (12) respectively without possibility of tilting or tumbling.

4. The air compressor (14) is recited and claimed in claim 3, wherein said tire fixing aerosol (9) basically comprises a canister (2), a cover (3), an actuator (4) and a dip tube (5) with deformed upper tubular section, wherein the canister (2), which is a hollow container, includes a neck opening (21), a canister arcuate bottom (24) and a holding chamber (22) for containing chemical sol (23) therein; said cover (3) includes a locking collar (31) for being engaged with the neck opening (21) of the canister (2) by means of thread-screwing way, which is done by any suitable fastening means including thread-screwing way or thermal fusing way though the thread-screwing way is shown here; said cover (3) further includes an upper annular gap (301) and a lower annular gap (302), wherein on the bottom wall of the cover (3), an internal annular curb (311) is disposed between the peripheral of the downwards round cylinder (32) and the locking collar (31) of the cover (3) while an annular gasket or washer (312) is disposed between the internal annular curb (311) and the locking collar (31) so that the neck opening (21) thread-screwed by the cover (3) and canister (2) becomes more stable and hermetical; The cover (3) further includes a plurality of equal-spaced vertical through trough (34) formed on the surrounding wall of the downwards round cylinder (32), and a bottom flange (33) formed at the bottom of the downwards round cylinder (32) to create a round hole (331) communicable with an internal circulating chamber (35) of the downwards round cylinder (32); The cover 3 further includes an aperture (39) on the top end thereof with a pair of opposed through slots (392) and a pair of opposed axle holes (391), wherein each through slot (392) is formed with top opening and bottom closed manner, and the pair axle holes (391) are located between the pair through slots (392); The upwards round cylinder (36) includes a first manifold (37) and a second manifold (38) to communicate with the internal circulating chamber (35); The cover (3) further includes a spring (6), which is inserted form the aperture (39) of the upwards round cylinder (36) and positioned on the bottom flange (33) in the internal circulating chamber (35) of the downwards round cylinder (32); said dip tube (5) of suitable length includes a tubular inner-space (50), a swollen top collar section (51) with a top closed end (510), a sealing O-ring (511) disposed on the top collar section (51), and a tube lower section (59); The dip tube (5) further includes a middle notched upper flange (52) with a sealing O-ring (53) wrapping on the middle notch thereof, a middle notched lower flange (56) with a sealing O-ring (57) wrapping on the middle notch thereof and a first annular neck groove (55) with a tube through hole (550) disposed between the middle notched upper flange (52) and middle notched lower flange (56) such that the tube through hole (550) run through the dip tube (5) at the first annular neck groove (55) in communicable manner; The dip tube (5) further includes a second annular neck groove (58) formed between the middle notched upper flange (52) and middle notched lower flange (56); and said tube lower section (59) of the dip tube (5) is inserted through the aperture (39) of the upwards round cylinder (36) and run out from the round hole (331) of the bottom flange (33); In this manner, the middle notched lower flange (56) of the dip tube (5) just contact against top end of the spring (6) and located between the downwards round cylinder (32) and upwards round cylinder (36) in the cover (3); Moreover, a pair of movable upper annular gap (301) and lower annular gap (302) are created between the first annular neck groove (55) and second annular neck groove (58) as well as the downwards round cylinder (32) and upwards round cylinder (36) respectively.

5. The air compressor (14) is recited and claimed in claim 4, wherein only one second transmitting hose (16) is exposed out of said case.

6. The air compressor (14) is recited and claimed in claim 4, wherein said actuator (4) includes an eccentric cam (41) with a pair of camshafts (411) on both sides thereof, and a lever ring (42) on the other end of the actuator (4), wherein the pair camshafts (411) are engaged with the pair axle holes (391) to allow the actuator (4) pivot around, and the camshaft (411) serves as a pivotal center of the lever ring (42) while the eccentric cam (41) is located on the aperture (39) of the upwards round cylinder (36) to contact against the top closed end (510) of the dip tube (5), and said pair through slot (392) of the upwards round cylinder (36) allows a user to handle the actuator (4) in semicircular swing for changing operation mode.

## Patentansprüche

1. Luftkompressor (14) mit Aufpump- und Aerosolsprühfunktionen für Reifen, der ein Gehäuse, das einen Luftkompressor (14) und eine Reifenreparatursprühdose (9) enthält, die im Inneren ein chemisches Sol (23) enthält, mit einem Auslöser (4) umfasst, **dadurch gekennzeichnet, dass** der Luftkompressor (14) zur Bereitstellung von Druckluft dient, wobei die Reifenreparatursprühdose (9) einen nach oben gerichteten runden Zylinder (36) mit einem ersten Anschlussstück (37) und einem zweiten Anschlussstück (38) umfasst, wobei das erste Anschlussstück (37) zum Empfangen der Druckluft von dem Luftkompressor (14) dient, während das zweite Anschlussstück (38) zur Bereitstellung des chemischen Sols (23) aus der Reifenreparatursprühdose (9) dient, **dadurch gekennzeichnet, dass** der Auslöser (4), der dazu dient, um den Betrieb des Luftkompressors (14) und der Reifenreparatursprühdose (9) zwischen den einzelnem Aufpump- und Reparaturfunktionen umzustellen, einen Exzenternocken (41) und einen Hebelring (42) beinhaltet, wobei der Exzenternocken (41) an dem nach oben gerichteten runden Zylinder (36) angeordnet ist, um es dem Benutzer zu ermöglichen, den Auslöser (4) durch halbkreisförmiges Verschwenken zu bedienen, um den Betriebsmodus zu ändern.

2. Luftkompressor (14) nach Anspruch 1, bei welchem das Gehäuse ferner eine erste Kammer (11), eine zweite Kammer (12) und eine dritte Kammer (13) umfasst, wobei die erste Kammer (11) eine Mehrzahl von Trennwänden (110), einen Schalter (111) und eine Mehrzahl von Betesügungssäulen (112) mit jeweils einem darin ausgebildeten Befestigungsbohrloch (113) beinhaltet, sodass der Luftkompressor (14) und ein Manometer (18) entsprechend durch jede Trennwand (110) voneinander getrennt sind, wobei der Schalter (111) an der Oberseite der ersten Kammer (11) vorgesehen ist und dazu dient, um den Betrieb des Luftkompressors (14) zu starten und anzuhalten, wobei die zweite Kammer (12), welche mit der ersten Kammer (11) dadurch kombiniert ist, dass eine Mehrzahl von Verriegelungselementen (7) durch eine Mehrzahl von daran ausgebildeten Durchgangsbohrungen (122) und die korrespondierenden Befestigungsbohrlöcher (113) in den Befestigungssäulen (112) der ersten Kammer (11) hindurchgeführt ist, eine schlangenförmig aufgewickelte innenliegende Aussparung (121) in einer Frontplatte, ein halbkreisförmig ausgestanztes Loch (123) zur Aufnahme des Manometers (18) in einer exponierten Weise und eine Seitenplatte (124) mit einer vorstehenden Platte (126) umfasst, die sich vertikal von einer angrenzenden Kante erstreckt, um mit einer korrespondierenden Seitenplatte (114) mit einer vorstehenden Platte (115) in der ersten Kammer (11) zusammenzupassen, wobei die dritte Kammer (13) einen umschlossenen Raum (130), eine innenliegende Aussparung (131) mit einem Stanzloch (132), einen an deren Oberseite ausgebildeten Ausschnitt (133) und ein Paar von Riegeln (134) beinhaltet, die an den zwei Seitenwänden zum Eingriff mit den jeweiligen vorstehenden Platten (115), (126) an der ersten Kammer (11) und der zweiten Kammer (12) ausgebildet sind.

3. Luftkompressor (14) nach Anspruch 2, bei welchem die Reifenreparatursprühdose (9) fest in dem umschlossenen Raum (130) der dritten Kammer (13) angebracht ist und mit den Seitenplatten (114), (124) an der ersten Kammer (11) und der zweiten Kammer (12) entsprechend ohne die Möglichkeit zum Kippen oder Fallen in Kontakt steht.

4. Luftkompressor (14) nach Anspruch 3, bei welchem die Reifenreparatursprühdose (9) im Wesentlichen einen Kanister (2), einen Deckel (3), einen Auslöser (4) und ein Tauchrohr (5) mit einem verformten oberen Rohrabschnitt umfasst, wobei der Kanister (2), der ein hohler Behälter ist, eine Halsöffnung (21), einen gekrümmten Kanisterboden (24) und eine Aufbewahrungskammer (22) zur Aufnahme des chemischen Sols (23) darin aufweist, wobei der Deckel (3) einen Schließkragen (31) aufweist, der mit der Halsöffnung (21) des Kanisters (2) mittels einer Gewindeverschraubungsmethode in Eingriff bringbar ist, welche, obwohl hierin die Gewindeverschraubungsmethode angegeben ist, durch eine beliebige geeignete Befestigungsmethode umfassend eine Gewindeverschraubungsmethode oder thermische Verschmelzungsmethode realisierbar ist, wobei der Deckel (3) außerdem einen oberen Ringspalt (301) und einen unteren Ringspalt (302) aufweist, wobei an der Bodenwand des Deckels (3) eine innenliegende ringförmige Umrandung (311) zwischen dem Außenumfang des nach unten gerichteten runden Zylinders (32) und dem Schließkragen (31) des Deckels (3) vorgesehen ist, wobei eine ringförmige Dichtung oder eine Unterlegscheibe (312) zwischen der innenliegenden ringförmigen Umrandung (311) und dem Schließkragen (31) angeordnet ist, sodass die Halsöffnung (21), die mit dem Deckel (3) gewindeverschraubt ist, und der Kanister (2) noch stabiler und luftdicht verschlossen werden können, wobei der Deckel (3) ferner eine Mehrzahl von gleich voneinander beabstandeten vertikal durchgehenden Rinnen (34) umfasst, die an der Umfangswand des nach unten gerichteten runden Zylinders (32) geformt sind, wobei ein Bodenflansch (33) an dem Boden des nach unten gerichteten runden Zylinders (32) ausgebildet ist, um ein rundes Loch (331) zu bilden, das mit einer internen Zirkulationskammer (35) des nach unten gerichteten runden Zylinders (32) kommunizieren kann, wobei der Deckel (3) außerdem an dessen oberen Ende eine Öffnung (39) mit einem Paar von gegenüberliegenden Durchgangsschlitzen (392) und ein Paar von gegenüberliegenden Achslöchern (391) aufweiset, wobei jeder Durchgangsschlitz (392) mit einer oberen Öffnung und mit einer Art von geschlossener Unterseite ausgebildet ist, wobei das Paar von Achslöchern (391) zwischen dem Paar von Durchgangsschlitzen (392) angeordnet ist, wobei der nach oben gerichtete runde Zylinder (36) ein erstes Anschlussstück (37) und ein zweites Anschlussstück (38) umfasst, um mit der internen Zirkulationskammer (35) zu kommunizieren, wobei der Deckel (3) ferner eine Feder (6) beinhaltet, die von der Öffnung (39) des nach oben gerichteten runden Zylinders (36) her eingesetzt ist und an dem Bodenflansch (33) in der internen Zirkulationskammer (35) des nach unten gerichteten runden Zylinders (32) positioniert ist, wobei das Tauchrohr (5) mit einer geeigneten Länge einen rohrförmigen Innenraum (50), einen verbreiterten oberen Kragenabschnitt (51) mit einem oberen geschlossenen Ende (510), einen O-Dichtungsring (511), der an dem oberen Kragenabschnitt (51) vorgesehen ist, und einen unteren Rohrabschnitt (59) umfasst, wobei das Tauchrohr (5) außerdem einen in der Mitte eingekerbten oberen Flansch (52) mit einem in dessen mittige Einkerbung eingesetzten O-Dichtungsring (53), einen in der Mitte eingekerbten unteren Flansch (56) mit einem in dessen mittige Einkerbung eingesetzten O-Dichtungsring (57) und eine erste ringförmige Halsnut (55) mit einer Rohrdurchgangsöffnung (550) umfasst, die zwischen dem in der Mitte eingekerbten oberen Flansch (52) und dem in der Mitte eingekerbten unteren Flansch (56) vorgesehen ist, sodass die Rohrdurchgangsöffnung (550) an der ersten ringförmigen Halsnut (55) durch das Tauchrohr (5) in einer kommunizierenden Weise hindurchgeht, wobei das Tauchrohr (5) außerdem eine zweite ringförmige Halsnut (58) aufweist, die zwischen dem in der Mitte eingekerbten oberen Flansch (52) und dem in der Mitte eingekerbten unteren Flansch (56) ausgebildet ist, wobei der untere Rohrabschnitt (59) des Tauchrohrs (5) durch die Öffnung (39) des nach oben gerichteten runden Zylinders (36) eingesetzt ist und aus dem runden Loch (331) des Bodenflanschs (33) vorsteht, wobei auf diese Weise der in der Mitte eingekerbte untere Flansch (56) des Tauchrohrs (5) gerade mit dem oberen Ende der Feder (6) in Kontakt steht und zwischen dem nach unten gerichteten runden Zylinder (32) und dem nach oben gerichteten runden Zylinder (36) in dem Deckel (3) angeordnet ist, wobei darüber hinaus ein Paar eines beweglichen oberen Ringspalts (301) und unteren Ringspalts (302) entsprechend zwischen der ersten ringförmigen Halsnut (55) und der zweiten ringförmigen Halsnut (58) sowie dem nach unten gerichteten runden Zylinder (32) und dem nach oben gerichteten runden Zylinder (36) gebildet ist.

5. Luftkompressor (14) nach Anspruch 4, bei welchem nur ein zweiter Weiterleitungsschlauch (16) aus dem Gehäuse freiliegend ist.

6. Luftkompressor (14) nach Anspruch 4, bei welchem der Auslöser (4) einen Exzenternocken (41) mit einem Paar von Nockenwellen (411) an dessen zwei Seiten umfasst, wobei ein Hebelring (42) an dem anderen Ende des Auslösers (4) vorgesehen ist, wobei das Paar von Nockenwellen (411) mit dem Paar von Achslöchern (391) in Eingriff steht, um zu ermöglichen, dass der Auslöser (4) herum geschwenkt werden kann, wobei die Nockenwelle (411) als ein Drehzentrum des Hebelrings (42) dient, während der Exzenternocken (41) an der Öffnung (39) des nach oben gerichteten runden Zylinders (36) angeordnet ist, um das obere geschlossene Ende (510) des Tauchrohrs (5) zu kontaktieren, wobei es das Paar von Durchgangsschlitzen (392) des nach oben gerichteten runden Zylinders (36) einem Benutzer ermöglicht, den Auslöser (4) zur Änderung des Betriebsmodus in einer halbkreisförmig schwingenden Weise zu bedienen.

## Revendications

1. Compresseur d'air (14), possédant des fonctions de gonflage et de pulvérisation d'aérosol pour des pneus, qui comprend un boîtier contenant un compresseur d'air (14) et un aérosol de réparation de pneu (9) contenant un sol chimique (23) dans celui-ci avec un actionneur (4), **caractérisé en ce que** ledit compresseur d'air (14) sert à fournir de l'air comprimé ; ledit aérosol de réparation de pneu (9) inclut un cylindre rond haut (36) avec un premier collecteur (37) et un second collecteur (38), dans lequel le premier collecteur (37) sert à recevoir l'air comprimé à partir du compresseur d'air (14) alors que le second collecteur (38) sert à fournir le sol chimique (23) à partir de l'aérosol de réparation de pneu (9) ; **caractérisé en ce que** ledit actionneur (4), qui sert à changer le fonctionnement du compresseur d'air (14) et de l'aérosol de réparation de pneu (9) entre les fonctions de gonflage et de réparation individuelles, inclut une came excentrique (41) et une bague levier (42), dans lequel la came excentrique (41) est située sur le cylindre rond haut (36) pour permettre à un utilisateur de manipuler l'actionneur (4) en rotation semi-circulaire pour changer le mode de fonctionnement.

2. Compresseur d'air (14) selon la revendication 1, dans lequel ledit boîtier comprend en outre un premier compartiment (11), un deuxième compartiment (12) et un troisième compartiment (13), dans lequel ledit premier compartiment (11) inclut une pluralité de cloisons (110), un interrupteur (111) et une pluralité d'arbres d'entrée en prise (112) chacun avec un alésage d'entrée en prise (113) dans celui-ci de telle sorte que le compresseur d'air (14) et un manomètre (18) soient respectivement séparés par chaque cloison (110) ; l'interrupteur (111) est disposé sur la surface supérieure du premier compartiment (11) pour servir à démarrer et arrêter le fonctionnement du compresseur d'air (14) ; ledit deuxième compartiment (12), qui est associé au premier compartiment (11) en utilisant une pluralité d'éléments de verrouillage (7) à travers une pluralité de trous débouchants (122) sur celui-ci et des alésages d'entrée en prise correspondants (113) dans les arbres d'entrée en prise (112) du premier compartiment (11), inclut un évidement interne enroulé en serpent (121) dans un panneau avant, un trou poinçonné semi-circulaire (123) pour loger le manomètre (18) de manière exposée, et un panneau latéral (124) avec un panneau saillant (126) verticalement étendu à partir d'un bord contigu pour être assorti à un panneau latéral correspondant (114) avec un panneau saillant (115) dans le premier compartiment (11); et ledit troisième compartiment (13) inclut un espace encerclé (130), un évidement interne (131) avec un trou poinçonné (132), une découpe (133) créée sur la surface supérieure de celui-ci, et une paire de verrouillages (134) formés sur les deux parois latérales pour l'entrée en prise avec les panneaux saillants (115), (126) sur le premier compartiment (11) et le deuxième compartiment (12) respectivement.

3. Compresseur d'air (14) selon la revendication 2, dans lequel ledit aérosol de réparation de pneu (9) est fermement disposé dans l'espace encerclé (130) du troisième compartiment (13) en contact avec des panneaux latéraux (114), (124) sur le premier compartiment (11) et le deuxième compartiment (12) respectivement sans possibilité d'inclinaison ou de chute.

4. Compresseur d'air (14) selon la revendication 3, dans lequel ledit aérosol de réparation de pneu (9) comprend fondamentalement un bidon (2), un couvercle (3), un actionneur (4) et un tube plongeur (5) avec une section tubulaire supérieure déformée, dans lequel le bidon (2), qui est un contenant creux, inclut une ouverture de goulot (21), un fond arqué de bidon (24) et une chambre de retenue (22) pour contenir un sol chimique (23) dans celle-ci ; ledit couvercle (3) inclut un collier de verrouillage (31) pour être en prise avec l'ouverture de goulot (21) du bidon (2) par vissage fileté, qui est réalisé par de quelconques moyens de fixation appropriés incluant un vissage fileté ou une fusion thermique bien que le vissage fileté soit présenté ici ; ledit couvercle (3) inclut en outre un espace annulaire supérieure (301) et un espace annulaire inférieur (302), dans lequel, sur la paroi inférieure du couvercle (3), un rebord annulaire interne (311) est disposé entre la périphérie du cylindre rond bas (32) et le collier de verrouillage (31) du couvercle (3) alors qu'un joint d'étanchéité ou une rondelle annulaire (312) est disposé entre le rebord annulaire interne (311) et le collier de verrouillage (31) pour que l'ouverture de goulot (21) vissée par filetage par le couvercle (3) et le bidon (2) soit plus stable et hermétique ; le couvercle (3) inclut en outre une pluralité de creux débouchants verticaux espacés de façon égale (34) formés sur la paroi périphérique du cylindre rond bas (32), et une bride inférieure (33) formée au fond du cylindre rond bas (32) pour créer un trou rond (331) pouvant être mis en communication avec une chambre de circulation interne (35) du cylindre rond bas (32) ; le couvercle (3) inclut en outre une ouverture (39) sur l'extrémité supérieure de celui-ci avec une paire de fentes débouchantes opposés (392) et une paire de trous axes opposés (391), dans lequel chaque fente débouchante (392) est formée de manière ouverte en haut et fermée en bas, et la paire de trous axes (391) sont situés entre la paire de fentes débouchantes (392) ; le cylindre rond haut (36) inclut un premier collecteur (37) et un second collecteur (38) pour communiquer avec la chambre de circulation interne (35) ; le couvercle (3) inclut en outre un ressort (6), qui est inséré à partir de l'ouverture (39) du cylindre rond haut (36) et positionné sur la bride inférieure (33) dans la chambre de circulation interne (35) du cylindre rond bas (32) ; ledit tube plongeur (5) de longueur appropriée inclut un espace intérieur tubulaire (50), une section collier supérieure gonflée (51) avec un extrémité fermée supérieure (510), un joint torique d'étanchéité (511) disposé sur la section collier supérieure (51), et une section inférieure de tube (59), le tube plongeur (5) inclut en outre une bride supérieure à encoche médiane (52) avec un joint torique d'étanchéité (53) s'enveloppant sur l'encoche médiane de celle-ci, une bride inférieure à encoche médiane (56) avec un joint torique d'étanchéité (57) s'enveloppant sur l'encoche médiane de celle-ci et une première rainure de goulot annulaire (55) avec un trou débouchant de tube (550) disposé entre la bride supérieure à encoche médiane (52) et la bride inférieure à encoche médiane (56) de telle sorte que le trou débouchant de tube (550) passe à travers le tube plongeur (5) au niveau de la première rainure de goulot annulaire (55) de manière pouvant être mis en communication ; le tube plongeur (5) inclut en outre une seconde rainure de goulot annulaire (58) formée entre la bride supérieure à encoche médiane (52) et la bride inférieure à encoche médiane (56) ; et ladite section inférieure de tube (59) du tube plongeur (5) est insérée à travers l'ouverture (39) du cylindre rond haut (36) et sort du trou rond (331) de la bride inférieure (33) ; de cette manière, la bride inférieure à encoche médiane (56) du tube plongeur (5) entre juste en contact avec l'extrémité supérieure du ressort (6) et est située entre le cylindre rond bas (32) et le cylindre rond haut (36) dans le couvercle (3) ; en outre, une paire d'un espace annulaire supérieur (301) et d'un espace annulaire inférieur (302) mobiles est créée entre la première rainure de goulot annulaire (55) et la seconde rainure de goulot annulaire (58) ainsi que le cylindre rond bas (32) et le cylindre rond haut (36), respectivement.

5. Compresseur d'air (14) selon la revendication 4, dans lequel seulement un second tuyau flexible de transmission (16) est exposé hors dudit boîtier.

6. Compresseur d'air (14) selon la revendication 4, dans lequel ledit actionneur (4) inclut une came excentrique (41) avec une paire d'arbres à came (411) sur les deux côtés de celle-ci, et une bague levier (42) sur l'autre extrémité de l'actionneur (4), dans lequel la paire d'arbres à came (411) est en prise avec la paire de trous axes (391) pour permettre à l'actionneur (4) de pivoter, et l'arbre à came (411) sert de centre de pivotement de la bague levier (42) alors que la came excentrique (41) est située sur l'ouverture (39) du cylindre rond haut (36) pour entrer en contact avec l'extrémité fermée supérieure (510) du tube plongeur (5), et ladite paire fente débouchante (392) du cylindre rond haut (36) permet à un utilisateur de manipuler l'actionneur (4) en rotation semi-circulaire pour changer le mode de fonctionnement.
